# EUROPÄISCHE PATENTSCHRIFT

(11) **EP 0 794 102 B1**
(45) Veröffentlichungstag und Bekanntmachung des Hinweises auf die Patenterteilung: **17.11.1999**
(21) Anmeldenummer: 97250062.3
(22) Anmeldetag: 06.03.1997
(51) Int. Cl.: B61H 5/00, B60T 8/00

(54) **Bremsbetätigungseinrichtung für Schienenfahrzeuge**
Brake actuator device for railway vehicles
Dispositif actionnement de frein pour véhicules de rails

(30) Priorität: 08.03.1996 DE 19610664
(43) Veröffentlichungstag der Anmeldung: 10.09.1997
(73) Patentinhaber: MANNESMANN Aktiengesellschaft, 40213 Düsseldorf (DE)
(72) Erfinder: Krause, Reiner, Dipl.-Ing., 30916 Isernhagen (DE); Winkelmann, Klaus B., Dipl.-Ing., 30880 Laatzen (DE); Niederstadt, Jörg Dr.Ing., 78126 Königsfeld/Weiler (DE); Kemner, Axel, Dipl.-Ing., 30916 Isernhagen (DE)
(74) Vertreter: Presting, Hans-Joachim, Dipl.-Ing.

(56) Entgegenhaltungen:
- DE-A- 4 242 392
- GB-A- 2 153 461
- US-A- 3 955 370
- US-A- 4 068 746
- US-A- 4 258 830
- US-A- 4 291 789

## Beschreibung

Die Erfindung betrifft eine Bremszylindereinrichtung für Schienenfahrzeuge gemäß Oberbegriff des Patentanspruchs 1.

Aus dem Stand der Technik, beispielsweise DE 42 42 392 A1, ist ein gesamtes Bremssystem für ein Schienenfahrzeug bzw. für im Fahrzeugverbund eingebundene Schienenfahrzeuge bekannt. Das eigentliche Stellorgan ist nach wie vor ein Arbeitszylinder, der auf ein Bremsgestänge wirkt und über dasselbe zwei Bremsbacken betätigt die auf eine mittig zur Fahrzeugachse angeordneten Bremsscheibe einwirkt. Der dort gezeigte Bremszylinder ist über ein elektropneumatisches Ansteuersystem angesteuert. Die Bremssteuerung selbst wird von einer elektronischen Einrichtung überwacht, welche unter anderem das Gleitschutzsystem und die Rollüberwachung enthält. Auch Lasterfassung sowie unterschiedliche Bremsarten sind in die Bremssteuerung einspeisbar. Das ganze System ist über eine Elektronik und ein entsprechendes Diagnosesystem mit dem Führerfahrzeug verbunden. Die Beaufschlagung des Bremszylinders mit Druckmittel erfolgt gemäß der UlC-Norm über eine pneumatische Signalleitung sowie eine Hauptluftleitung. Ein System dieser Art ist bereits ein intelligentes Bremssystem, welches sich unterschiedlichen Bremsgegebenheiten, beispielsweise durch Lasterfassung anpaßt. In die gesteuerte bzw. geregelte Ansteuerung des Bremszylinders geht auch die Überwachung des angesteuerten Stelldruckes in die Elektronik mit ein. Darüber hinaus wird ein erwartungsgemäßes Rollen der Räder über eine entsprechende Sensorik überwacht und in das elektronische System hinsichtlich einer Rollüberwachung und eines Gleitschutzes miteingegeben. Da die Sicherheitsaspekte sowie die Funktionsvielfalt bei diesem Stand der Technik im Vordergrund stehen, ist eine wirtschaftliche Ausnutzung der bereitgestellten Stellenergie in Form von pneumatischer Energie nur zweitrangig. Das Bremsgestänge selbst wird beispielsweise durch einen Bremsmomentüberwacher permanent abgefragt und der entsprechende Meßwert sowohl in die Bremssteuerung als auch in das Diagnosesystem eingegeben. Die Bremshübe sowohl am Bremszylinder als auch am eigentlichen Gestänge bzw. an den Bremsbacken, die sich an die Bremsscheibe anlegen sollen, werden hier nicht berücksichtigt.

Ausgehend von diesem Stand der Technik liegt der Erfindung die Aufgabe zugrunde, eine an sich vorteilhafte bekannte Bremseinrichtung dahingehend weiterzubilden, daß die Stellwege des Bremszylinders kurz und der Luftverbrauch zur Einleitung der Bremswirkung gering gehalten wird.

Die gestellte Aufgabe ist bei einer gattungsgemäßen Bremseinrichtung erfindungsgemäß durch die kennzeichnenden Merkmale des Patentanspruches 1 gelöst. Weitere vorteilhafte Ausgestaltungen der Erfindung sind in den Unteransprüchen angegeben.

Das Wesen der Erfindung besteht darin, daß der Bremszylinder nunmehr ein elektronisch wegabhängig geregelter Positonierzylinder ist. Gegenüber einer gattungsgemäßen Einrichtung, bei der der Bremszylinder lediglich hinsichtlich seines Stelldruckes und des auf das Bremsgestänge wirkende Bremsmoment überwacht wird, kommt beim Gegenstand der vorliegenden Anmeldung nunmehr auch eine Überwachung des Arbeitshubes bzw. Arbeitsweges des Positionierzylinders bzw. des Bremszylinders hinzu. Der Bremszylinder erzeugt und überträgt die Stellkraft auf das Bremsgestänge. Dabei wird im Regelfall unterschieden zwischen einem Anlegehub und dem eigentlichen Bremshub. Der Anlegehub ist notwendig, da die Bremsbacken bei gelöster Bremse von der Oberfläche der Bremsscheibe beabstandet sind. Dieser Weg muß bei Einleitung eines Bremsvorganges durch Ausführen eines Anlegehubes zunächst zurückgelegt werden. Erst, wenn die Bremsbacken an der Bremsscheibe anliegen, kann die eigentliche Bremskraft bewirkt werden. Der Bremszylinder, der den Anlegehub bereits ausgeführt hat, wird nunmehr einen Bremshub ausführen, der im wesentlichen von der Elastizität des Bremsgestänges aufgenommen wird und bewirkt, daß die Bremsbacken mehr oder weniger stark auf die Bremsscheibe gepreßt werden. Der Anlegehub unterscheidet sich vom eigentlichen Bremshub dadurch, daß beim Anlegehub ein relativ großes Druckmittelvolumen bei relativ kleinem Druck verschoben wird und beim Bremshub ein relativ kleines Druckmittelvolumen bei relativ hohem Druck verschoben wird. Der Druckmittelverbrauch zur Erzeugung des Anlegehubes stand aus wirtschaftlichen Überlegungen bislang nicht zur Diskussion. Mit der erfindungsgemäßen Ausbildung des Bremszylinders als Weg-rückgekoppelter geregelter Positionierzylinder führt dabei nicht nur zu einem geringerem Luftverbrauch, sondern auch zu einer erheblich schnelleren Verfügbarkeit der Bremswirkung. Die Verwendung eines Positionierzylinders als Bremszylinder berücksichtigt im wesentlichen den Anlegehub. Aus der praktischen Anwendung zeigt sich, daß der Anlegehub bei bekannten Bremseinrichtungen in Abhängigkeit von der Abnutzung der Bremsbacken sowie der Abnutzung der Bremsscheibe variiert. Der eigentliche Anlegehub ist zwar in der Praxis nur in der Größenordnung einiger Millimeter, jedoch ist hierbei zu berücksichtigen, daß die Bremszylinder darauf ausgelegt sind, eine relativ große Bremskraft bei relativ kleinem Hub auszuführen. Sie sind nicht darauf ausgelegt, relativ große Arbeitshübe wie die des Anlegehubes auszuführen. Bei der erfindungsgemäßen Verwendung eines Positionierzylinders als Bremszylinder werden alle diese Aspekte berücksichtigt. Durch die Wegregelung des Zylinders ist es nunmehr möglich, unabhängig vom Abnutzungsgrad der Bremsbacken stets einen konstant kleinen Anlegehub zu realisieren. In weiterer Ausgestaltung der Erfindung ist die Rückkopplung des vom Positionierzylinder ausgeführten Weges in eine entsprechende Bremssteuerung derart berücksichtigt, daß aufgrund des jeweils zuletzt ausgeführten Bremsvorganges die Bremsbacken nur auf einen konstant kleinen Abstand von der Bremsscheibe gelöst werden. Dies führt zur Minimierbarkeit des Anlegehubes. Daraus resultiert, wie aus der obigen Problematik erkenntlich, daß die Bremswirkung in viel kürzerer Zeit verfügbar ist, da der verzögernde Anlegehub minimiert wird. Auch bei Abnutzung bleiben diese Bedingungen optimal, wenn in erfindungsgemäßer weiterer Ausgestaltung das gesamte Bremssystem im Hinblick auf die Weg-geregelte Ansteuerung des Positionierzylinders adaptiv angelegt wird. Dadurch entstehen insgesamt kurze pneumatische Wege, wobei dann auch der Luftverbrauch minimiert wird. Die Minimierung des Anlegehubes sowie die Minimierung des Luftverbrauches führen auch in Summe zu dem Vorteil, daß die Bremse bzw. die Bremswirkung in extrem kurzer Zeit verfügbar ist. In weiterer Ausgestaltung der Erfindung ist vorgesehen, daß jeder Zylinder separat geregelt wird. Damit paßt sich jeder jeweilige Bremszylinder an die individuellen Gegebenheiten bzw. an den individuellen Abnutzungsgrad auf jede jeweilige Achse bezogen individuell an. Durch die adaptive Auslegung der Bremseinheit, die den Regler des Positionierzylinders umfaßt, ist nach jedem Bremsvorgang eine optimale Rückstellung der Bremsbacken und eine optimale Erkennung der Betriebsparameter möglich. In Verbindung mit dieser adaptiven Auslegung ist es beispielsweise dann auch möglich, daß eine genauere Fehlerdiagnose am jeweiligen Bremssystem einer Schienenfahrzeugachse registriert werden kann. So kann beispielsweise registriert werden, wenn das Gestänge bricht und ein ungewohnt hoher Arbeitshub bei relativ kleinem Druck registriert wird. Auch der Verlust eines Bremsbelages kann auf ähnliche Weise registriert werden. Ferner können dabei die einzelnen Fehler hinsichtlich ihres spezifischen Auswirkens auf die Regelung als Muster auch erkannt werden. So kann beispielsweise zwischen dem Verlust eines Bremsbelages und dem Bruch des Bremsgestänges klar unterschieden werden.

Die Erfindung ist in der Zeichnung dargestellt und im nachfolgenden näher beschrieben. Es zeigt:
- Fig. 1: wesentliche Elemente des erfindungsgemäßen Positionierzylinders in Verbindung mit einer Schienenfahrzeugbremse und
- Fig. 2: das Druckverhalten in Abhängigkeit zum Arbeitshub des Bremszylinders.

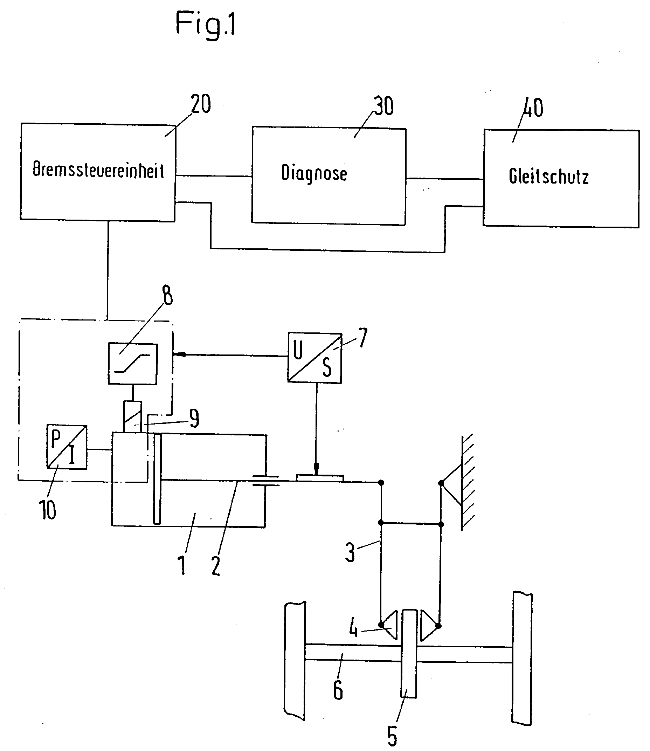

Fig. 1 zeigt die wesentlichen Elemente der Erfindung in Verbindung mit den Elementen, auf welche dieselbe einwirkt. Der eigentliche Bremszylinder 1 ist hierbei in erfindungsgemäßer Weise als Positionierzylinder ausgebildet. Der Positionierzylinder ist ein Kolbenzylinderaggregat. Die Kolbenstange 2 ist dabei mit einem Bremsgestänge 3 verbunden, welches die Bremsbacken 4 anlenkt. Diese werden beim Bremsvorgang an die Bremsscheibe 5 angelegt, die mit der jeweiligen Fahrzeugachse 6 des Schienenfahrzeuges verbunden ist. Der Wegaufnehmer 7 ist hierbei zweckmäßigerweise mit der Kolbenstange 2 verbunden. Der Wegaufnehmer 7 könnte in beliebiger Weise auch irgendwo im Bremsgestänge 3 angeordnet sein, wo ein registrierbarer Weg oder ein Betätigungswinkel entsteht. Dieser elektrisch erfaßte Weg wird einem entsprechendem Regler 8 zugeführt. Dieser kann wiederum mit einer übergeordneten Bremssteuereinheit 20 verbunden sein, die in Verbindung mit dem Regler 8 adaptiv wirkt. Eine weitergehende Einbindung in das Diagnosesystem 30 des Zugverbundes ist ohne weiteres möglich und sogar zweckmäßig. Der Regler 8 selbst steuert am Ausgang eines oder mehrerer Servoventile 9, die den Positionier-bzw. Bremszylinder 1 ansteuern. Mit dem entsprechenden Druckraum im Bremszylinder 1 steht noch ein P/l-Wandler 10 in druckmittelmäßiger Verbindung. Der Regler 8 sowie die Bremssteuereinheit 20 wirken derart zusammen, daß ein intelligentes adaptives Bremssystem entsteht. Dieses ist jedem jeweiligen Bremszylinder zugeordnet, so daß die individuellen Gegebenheiten an jeder einzelnen Bremse eines Zugverbundes erfaß- und berücksichtigbar sind. Daher können auch wiederkehrende Bremsverhaltensweisen registriert und als Muster zur späteren Erkennung abgespeichert werden. Der elektronische Teil der gesamten Bremssteuereinheit kann dabei wiederum mit dem Diagnosesystem des Zugverbundes bzw. des Führerfahrzeuges in Korrespondenz stehen.

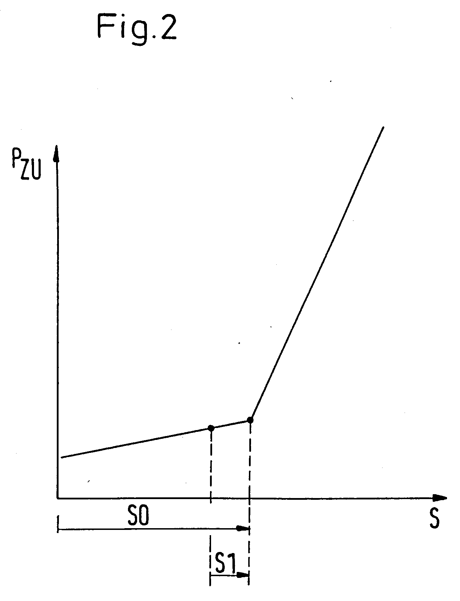

Figur 2 zeigt eine graphische Darstellung der Abhängigkeit des Bremsdruckes P_{zu} vom zurückgelegten Weg S bzw. vom Hub des Bremszylinders. Hierbei sind im wesentlichen zwei Geradenabschnitte zu erkennen. Der erste Geradenabschnitt mit niedriger Steigung stellt die Zurücklegung des Anlegehubes dar. In dieser Darstellung findet keine Qualifizierung des Systems gegenüber dem Stand der Technik dar, sondern soll nur klarstellen, wie Anlegehub und Bremshub im Druckwegdiagramm erkennbar sind. Durch die Tatsache, daß nunmehr auch der Weg registriert wird, ist es mit der Erfindung erst möglich, ein solches Verhalten in die Bremssteuereinheit elektrisch einspeisen zu können, als Information für das jeweilige Bremsverhalten. Der erste Geradenabschnitt stellt den Anlegehub dar, der mit relativ kleinem Druck über einen großen Weg verläuft. Der zweite Geradenabschnitt berührt den ersten Geradenabschnitt an einem Knickpunkt, der positionsmäßig die Lage angibt, bei der der Bremsbelag an der Bremsscheibe zur Anlage kommt. Liegt der Bremsbelag nun an, so steigt der Druck mit erheblich größerer Steigung abhängig vom Weg. Der Weg wird in diesem Abschnitt nur noch von der mechanischen Elastizität des Gestänges und der gesamten mechanischen Anlenkung dargestellt. Die Steigung dieses zweiten Geradenabschnittes hängt dabei im wesentlichen nur noch davon ab, wo genau die Wegerfassung im Bremsgestänge stattfindet. Das Wesen der Erfindung besteht nun darin, den ersten Geradenabschnitt hinsichtlich seiner Projektion auf die Wegachse dieses Diagramms möglichst zu minimieren. Dabei wird nicht nur die zu verschiebende Luftmenge minimiert und damit der Luftverbrauch entsprechend niedrig gehalten, sondern auch die Ansprechzeit minimiert. Die Ansprechzeit der Bremswirkung ist dabei diejenige Zeit, die benötigt wird, um den Anlegehub durchzuführen. Innerhalb dieses Hubes und der dafür benötigten Zeit entsteht noch keine Bremswirkung. Durch eine Minimierung dieser Zeit bzw. einer Minimierung des Anlegehubes ist die Bremse deutlich schneller verfügbar. Diese Wirkung entsteht ausschließlich durch die Tatsache, daß der Anlegehub durch die erfindungsgemäße Verwendung eines Positionierzylinders nebst Regler und Wegaufnehmer nunmehr überhaupt registrierbar und damit gezielt minimierbar ist.

Bei einigen Bremssystemen wird im Gegensatz zum o. g. System eine Bremse verwendet, die im nicht betätigten Zustand die Bremsbeläge anlegt. D. h. bei Abfall des Druckes bremsen die Bremszylinder aus einem Federspeicher heraus. Bei entsprechender Umkehr der Wirkrichtung der Arbeitszylinder im Hinblick auf den geregelt angesteuerten Druck ist die Verwendung erfindungsgemäßer Positionierzylinder in Verbindung mit Federspeichern auch denkbar.

Aus der Darstellung von Figur 2 ist der Unterschied der erfindungsgemäßen Bremseinrichtung zu Bremsanlagen bekannter Art in seiner Wirkung deutlich erkennbar.

So stellt der Anlegehub S0 denjenigen bei bekannten Bremseinrichtungen dar. Hierbei ist zu erwähnen, daß S0 in bekannten Bremsanlagen abhängig vom Verschleiß variabel ist. Dementsprechend sind auch die Verfügbarkeiten solcher Bremsen variabel.

Demgegenüber stellt S1 den durch die Erfindung bewirkten Anlegehub dar. Dieser ist unabhängig vom Verschleiß immer konstant und minimal. Die Verfügbarkeitszeiten sind somit minimiert und immer konstant klein.

### Bezugszeichenliste:

- 1: Bremszylinder
- 2: Kolbenstange
- 3: Bremsgestänge
- 4: Bremsbacken
- 5: Bremsscheibe
- 6: Fahrzeugachse
- 7: Wegaufnehmer
- 8: Regler
- 9: Bremsventil, stetig- oder Schaltventil
- 10: P-i-Wandler, Druckaufnehmer
- 20: Bremssteuereinheit
- 30: Diagnoseeinheit
- 40: Gleitschutzeinheit

## Patentansprüche

1. Bremseinrichtung, insbesondere für Schienenfahrzeuge, mit einer elektronischen Einheit, über welche der Bremszylinder geregelt ansteuerbar ist, sowie mit einem Bremsgestänge, über welches Bremsbeläge an eine Bremsscheibe anpreßbar sind,
dadurch gekennzeichnet,
daß der Bremszylinder (1) als wegabhängig geregelter Positionierzylinder ausgebildet ist.

2. Bremseinrichtung nach Anspruch 1,
dadurch gekennzeichnet,
daß die Kolbenstange (2) des Bremszylinders mit einem Wegaufnehmer (7) versehen ist.

3. Bremseinheit nach Anspruch 2,
dadurch gekennzeichnet,
daß die elektronische Einheit (20) als adaptives System mit einem Mikrocomputer und einem organisierten Datenfeld ausgelegt ist.

4. Bremseinheit nach Anspruch 2 oder 3,
dadurch gekennzeichnet,
daß das Bremsventil (9) ein elektrisch ansteuerbares Stetig- oder Schaltventil ist.

## Claims

1. Braking device, in particular for rail vehicles, with an electronic unit via which the brake cylinder can be actuated in a regulated manner, and with a brake linkage via which brake linings can be pressed against a brake disc,
characterised in that the brake cylinder (1) is formed as a positioning cylinder which is regulated in accordance with displacement.

2. Braking device according to claim 1,
characterised in that the piston rod (2) of the brake cylinder is provided with a displacement transducer (7).

3. Braking unit according to claim 1,
characterise in that the electronic unit (20) is designed as an adaptive system with a microcomputer and an organised data field.

4. Braking unit according to claim 2 or 3,
characterised in that the brake valve (9) is a continuously variable or an on-off valve which can be electrically actuated.

## Revendications

1. Dispositif de freinage, en particulier pour des véhicules sur rails, comportant une unité électronique, grâce à laquelle le cylindre de frein peut être commandé de façon réglée, ainsi qu'une timonerie de frein, grâce à laquelle les garnitures de frein peuvent être pressées contre un disque de frein,
caractérisé en ce que le cylindre de frein (1) est réalisé comme cylindre de positionnement réglé de façon dépendant de la course.

2. Dispositif de freinage selon la revendication 1,
caractérisé en ce que la tige de piston (2) du cylindre de frein est munie d'un capteur de déplacement (7).

3. Unité de freinage selon la revendication 2,
caractérisée en ce que l'unité électronique (20) est réalisée comme système adaptatif ayant un micro-ordinateur et une zone de données organisée.

4. Unité de freinage selon la revendication 2 ou 3,
caractérisée en ce que la valve de frein (9) est une valve de commutation ou une valve continue électriquement commandable.
